# EUROPÄISCHE PATENTSCHRIFT

(11) **EP 0 703 655 B1**
(45) Veröffentlichungstag und Bekanntmachung des Hinweises auf die Patenterteilung: **08.01.1997**
(21) Anmeldenummer: 94115039.3
(22) Anmeldetag: 23.09.1994
(51) Int. Cl.: H02K 5/167

(54) **Axialspieleinstellung**
Axial backlash adjustment
Réglage du jeu axial

(43) Veröffentlichungstag der Anmeldung: 27.03.1996
(73) Patentinhaber: SIEMENS AKTIENGESELLSCHAFT, 80333 München (DE)
(72) Erfinder: Drexlmeier, Thomas, D-97450 Arnstein (DE); Schilling, Werner, D-97098 Würzburg (DE)

(56) Entgegenhaltungen:
- EP-A- 0 545 692
- DE-A- 2 044 858
- GB-A- 2 113 319
- GB-A- 2 152 294
- US-A- 4 649 306

## Beschreibung

Die Erfindung bezieht sich auf eine Axialspieleinstellung zwischen Rotor und Stator eines Motors gemaß Anspruch 1.

Durch die EP-B1-0 213 427 ist eine Axialspieleinstellung zwischen dem rotorseitigen Kragen einer Isolierendscheibe einerseits und in einer Stator-Lageraufnahme gehaltenem Kalottenlager andererseits bekannt, bei der zur Einstellung des Axialspiels die Kalottenbuchse des Kalottenlagers durch eine axiale Druckausübung axial verschiebbar und anschließend in ihrer Einstellendstellung relativ zu der Stator-Lageraufnahme durch Verkleben zusätzlich zu ihrem Preßsitz fixierbar ist.

Eine demgegenüber genauere und insbesondere unter Berücksichtigung hoher axialer Anlaufkrafte einfachere sowie betriebssicherere Axialspieleinstellung ist erfindungsgemaß durch die Lehre des Anspruchs 1 möglich; vorteilhafte Ausgestaltungen der Erfindung sind jeweils Gegenstand der Unteransprüche.

Bei der erfindungsgemäßen Axialspieleinstellung ist durch die Auslegung der Steigung der gewindeartigen Führung mit geringen Verstellkräften eine beliebig genaue axiale Verstellung der Kalottenbuchse gegenüber dem rotorseitigen Anlaufteil möglich. Die schraubgewindeartige Führung kann in fertigungstechnisch besonders einfacher Weise durch lediglich eine axiale Führungsanlage der Kalottenbuchse einerseits und einer Stator-Lageraufnahme andererseits mit zueinander gegenseitig gewindeartiger Steigung erfolgen; zur genaueren und insbesondere einen größeren Verstellbereich erlaubende Einstellung ist durch eine, insbesondere mehrgängige, schraubgewindeartige Führung am Außenumfang der Kalottenbuchse einerseits und einem korrespondierenden Führungsteil an einer Umfangsfläche der Stator-Lageraufnahme andererseits möglich.

Falls die Selbsthemmung der schraubgewindeartigen Führung zwischen der Kalottenbuchse einerseits und der Stator-Lageraufnahme andererseits nicht hinreichend eine unerwünschte Rückstellung der Einstellage der Kalotte relativ zum rotorseitigen Anlaufteil gewährleistet, ist nach einer Ausgestaltung der Erfindung eine formschlüssige Fixierungssicherung der Einstellage vorgesehen, die in fertigungstechnisch besonders einfacher Weise z.B. aus einer tangentialen Rasterung am Umfang der Kalottenbuchse und einer korrespondierenden, insbesondere elastisch nachgiebigen, Gegenrasterung an der Lageraufnahme besteht.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: einen axialen Querschnitt durch einen Kommutatormotor mit einer erfindungsgemäßen Axialspieleinstellung am kommutatorabgewandten Ende,
- FIG 2: eine erfindungsgemäße Kalottenbuchse,
- FIG 3: ein erfindungsgemäß für die Aufnahme der Kalottenbuchse gemäß FIG 2 ausgebildete Lagerschild-Aufnahme,
- FIG 4: die gemäß FIG 2,3 einzeln dargestellten Bauteile nach ihrer gegenseitigen Montage,
- FIG 5: die axiale Draufsicht auf eine erfindungsgemäße Lagerung mit einer durch Drehen axial verschiebbaren Kalottenhalterung,
- FIG 6: eine Detailausführung zur Einstellagensicherung der Kalotte gemäß FIG 5,
- FIG 7,8: eine erste Alternativausführung einer erfindungsgemäßen Kalottenbuchse bzw. Lageraufnahme,
- FIG 9,10: eine weitere Alternativausführung einer erfindungsgemäßen Kalottenbuchse bzw. Lageraufnahme.

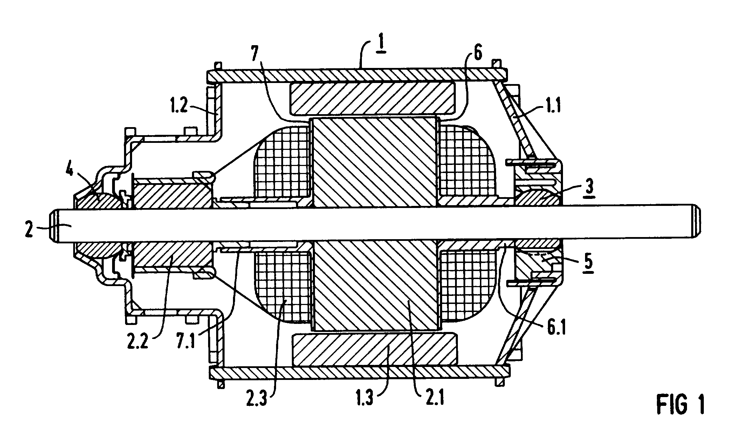

FIG 1 zeigt in einem Axiallängsschnitt einen Kommutatormotor mit am Innenumfang seines Motorgehäuses 1 befestigten Magnetschalen 1.3 und mit in beidendseitigen Lagerschilden 1.1 bzw.1.2 in Kalotten 3 bzw.4 drehbar gelagerter Rotorwelle 2 mit darauf befestigtem Rotorblechpaket 2.1 mit eingebrachter Rotorwicklung 2.3 sowie mit einem an die Rotorwicklung 2.3 angeschlossenen Kommutator 2.2.

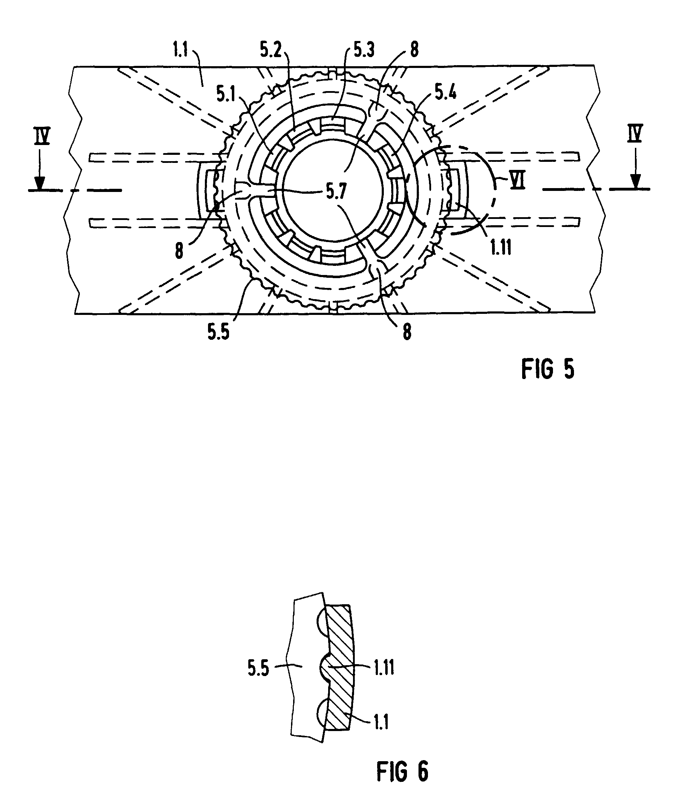

Die Wickelköpfe der Rotorwicklung 2.3 sind stirnseitig gegenüber dem Rotorblechpaket 2.1 durch zwischengelegte Isolierendscheiben 6 bzw.7 isoliert, die mit einem die Rotorwelle 2 umfassenden Kragen 6.1 bzw.7.1 den Wickelkopf gegenüber der Rotorwelle 2 isolieren und - wie im folgenden anhand der weiteren FIG 5 bis 10 unter Bezugnahme auf die rechte Kalottenlagerung näher erläutert - als rotorseitiges Anlaufteil für die Kalotte 3 als statorseitiges Anlaufteil dienen. Im Beispielsfall gemäß FIG 1 ist dabei ein gegen Null gehendes Axialspiel zwischen dem rotorseitigen Anlaufteil in Form des Kragens 6.1 einerseits und dem statorseitigen Anlaufteil in Form der Kalotte 3 andererseits angenommen.

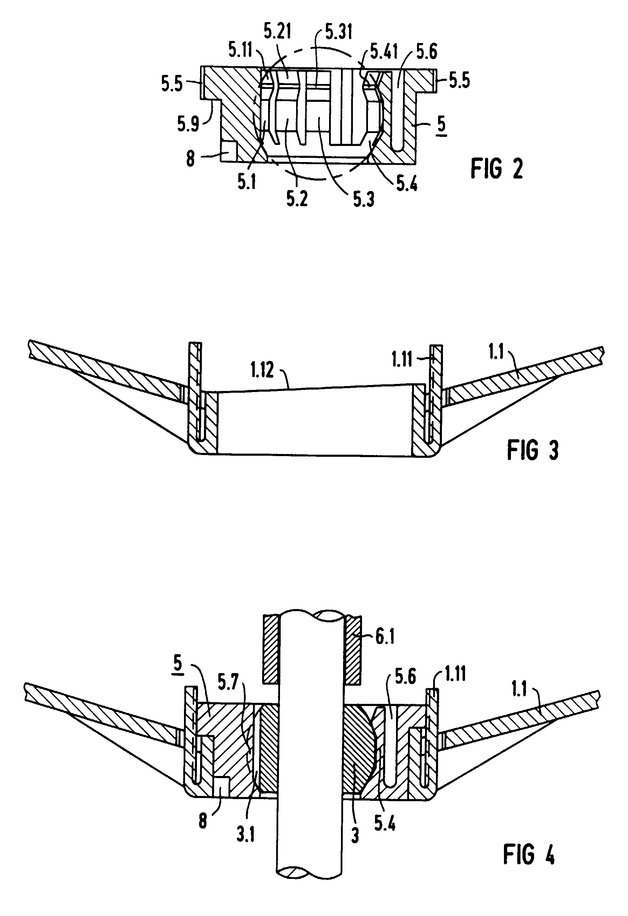

Zu einfachen und genauen Einstellung des axialen Abstandes der Kalotte 3 gegenüber dem Kragen 6.1 ist gemäß dem Ausführungsbeispiel nach FIG 2 bis 4 eine gegenseitige axiale Führungsanlage 5.9 der die Kalotte 3 aufnehmenden Kalottenbuchse 5 einerseits und der axialen Führungsanlage 1.12 des als Lageraufnahme ausgebildeten Lagerschildes 1.1 andererseits mit einer zueinander gegenseitigen gewindeartigen Steigung derart vorgesehen, daß nach dem Zusammenbau der beiden Bauteile gemäß FIG 2,3 zu der gegenseitigen Anordnung gemäß FIG 4 beim Drehen der Kalottenbuchse 5 die Kalottenbuchse 5 aufgrund der Gewindesteigung mehr oder weniger weit in ihrem axialen Abstand gegenüber dem Kragen 6.1 der Isolierscheibe 6 verschoben wird.

Zur Fixierung der Einstellendlage ist nach einer Ausgestaltung der Erfindung der Außenumfang der Kalottenbuchse 5 mit einer Rasterung 5.5 versehen, in die elastisch an der Lageraufnahme 1.1 angeordnete Rastlaschen 1.11 derart einrasten, daß die Rasterung 5.5 beim Drehen der Kalottenbuchse 5 gegenüber den Rastlaschen 1.11 durch eine gegenüber der betriebsmäßigen Belastung höheren Kraft überdreht, jedoch in der Endstellung durch Einrasten eine Fixierung der Einstellendlage gewährleistet werden kann.

FIG 5 und insbesondere die Ausschnittvergrößerung gemäß FIG 6 zeigen ein Ausführungsbeispiel, bei dem einerseits umfangsseitig eine Rasterung über den gesamten Umfang der Kalottenbuchse 5 und lagerschildseitig zwei gegenüberliegende, in FIG 6 vergrößert dargestellte, Rastlaschen 1.11 vorgesehen sind.

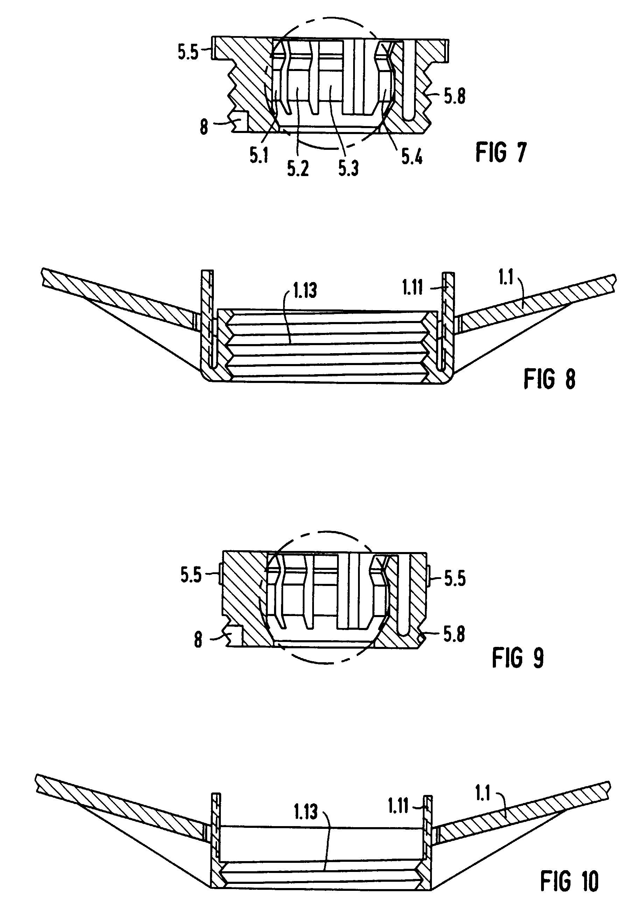

FIG 7,8 bzw.9,10 zeigen alternativ zu FIG 2 bis 4 eine Axialspieleinstellung mittels einer gewindeartigen Führung nicht an den axialen Stirnseiten sondern an den tangentialen Umfangsseiten der Kalottenbuchse 5 einerseits bzw. des Lagerschildes 1.1 andererseits. Dazu ist gemäß FIG 7 ein Außenumfang der Kalottenbuchse 5 ein mehrgängiges Schraubengewinde 5.8 und am Innenumfang des Lagerschildes 1.1 ein entsprechender, mehrgängiger Gewindegang 1.13 vorgesehen; FIG 9,10 zeigen eine demgegenüber kompaktere Ausführung, bei der lediglich ein einziger Gewindegang 5.8 in einen korrespondierenden Gewindegang 1.13 des Lagerschildes 1.1 schraubgewindeartig eingreift.

Die Einstellung kann dadurch vereinfacht werden, daß stirnseitig an der Kalottenbuchse 5 Mitnahme-Aussparungen 8 zum formschlüssigen Einsatz eines Verdrehwerkzeuges angeformt sind.

Zur weiteren Fertigungs- und Montagevereinfachung ist nach Ausgestaltung der Erfindung vorgesehen, die vorzugsweise aus Kunststoff gespritzte Kalottenbuchse 5 so auszubilden, daß nach dem Einführen der Kalotte 5 auf eine zusätzliche Lagesicherung durch eine gesonderte Klemmbrille verzichtet werden kann; dazu ist die Kalottenbuchse 5 mit einer radial elastisch aufweitbaren, die Kalotte 3 zumindest teilweise umgreifenden Kalottenhalterung mit einer axialen Einstecköffnung versehen, durch die die Kalotte 3 eingedrückt werden kann. Zweckmäßigerweise ist dazu die Kalottenhalterung in Form von elastisch radial aufweitbaren Fingern 5.1 bis 5.4 über ihren Umfang verteilt ausgebildet, die an ihren Fingerkuppen eine Einstecköffnung lassen, durch die die Kalotte 3 unter Spreizung der Finger 5.1 bis 5.4 einschnappend eingedrückt werden kann. Zur zusätzlichen Lagesicherung der Kalotte 3 nach ihrem Einschnappen sind an die Fingerkuppen der Finger 5.1 bis 5.4 nach radial innen ragende Schnapphaken 5.11;5.21;5.31;5.41 angeformt, die die eingedrückte Kalotte 3 zusätzlich sichernd halten.

Zur Sicherung der Kalotte 3 gegen eine unerwünschte Drehmitnahme durch die Rotorwelle 2 sind nach einer weiteren Ausgestaltung der Erfindung formschlüssige Führungseingriffe zwischen der Kalotte 3 einerseits und der Kalottenbuchse 5 andererseits vorgesehen, die gemäß FIG 4 bzw. FIG 5 dadurch gebildet werden können, daß die Kalotte 3 in axialer Längsrichtung mit Nuten 3.1 versehen ist, in die korrespondierende Führungsnocken 5.7 der Kalottenbuchse 5 mit Spiel eingreifen. Der über den Umfang gesehen freie Raum zwischen der vorbeschriebenen Führung der Kalotte kann in vorteilhafter Weise dazu mitbenutzt werden, um Fett-Depots 5.6 für ein die Kalotte 3 nachschmierendes Fett miteingespritzt sind.

## Patentansprüche

1. Axialspieleinstellung zwischen Rotor und Stator eines Motors mit einem rotorseitigen Anlaufteil (6.1) und einem statorseitigen Anlaufteil in Form eines die Rotorwelle (2) aufnehmenden Kalottenlagers (3) mit einer relativ zu einer Stator-Lageraufnahme (Lagerschild 1.1) durch Drehen mittels einer gewindeartigen Führung axial verstellbaren Kalottenbuchse (5).

2. Axialspieleinstellung nach Anspruch 1 mit einer schraubgewindeartigen Führung zwischen zumindest einem Teil der Außen-Umfangsfläche der Kalottenbuchse (5) einerseits und zumindest einem Teil der Innenumfangsfläche der Stator-Lageraufnahme (Lagerschild 1.1) andererseits.

3. Axialspieleinstellung nach Anspruch 1 mit einer gegenseitigen axialen Führungsanlage (5.9 bzw.1.12) der Kalottenbuchse (5) einerseits und der Stator-Lageraufnahme (1.1) andererseits mit zueinander gegenseitiger gewindeartigen Steigung.

4. Axialspieleinstellung nach zumindest einem der vorhergehenden Ansprüche mit einer formschlüssigen Fixierungssicherung (5.5;1.11) der Einstellage der Kalottenbuchse (5) relativ zu ihrer Lageraufnahme (1.1).

5. Axialspieleinstellung nach Anspruch 4 mit einer tangentialen Rasterung (5.5) am Umfang der Kalottenbuchse (5) und einer korrespondierenden, insbesondere elastischen, nachgiebigen Gegenrasterung (1.11) an der Lageraufnahme (1.1).

6. Axialspieleinstellung nach zumindest einem der vorhergehenden Ansprüche mit einer, insbesondere als Kunststoffteil ausgebildeten Kalottenbuchse (5) mit einer radial elastisch aufweitbaren, die Kalotte (3) zumindest teilweise umgreifenden Kalottenhalterung.

7. Axialspieleinstellung nach Anspruch 6 und/oder 7 mit einer axialen Einstecköffnung in der Kalottenbuchse (5) zum Eindrücken der Kalotte (3).

8. Axialspieleinstellung nach Anspruch 6 und/oder 7 mit einer einstückigen Kalottenbuchse (5) mit axialen, radial aufweitbaren, die Kalotte (3) umgreifenden gekrümmten Kalottenbuchse-Fingern (5.1-5.4) mit einer Einstecköffnung für die Kalotte (3) zwischen den Fingerkuppen.

9. Axialspieleinstellung nach Anspruch 7 und/oder 8 mit die axial angedrückte Kalotte (3) hintergreifenden Schnapphaken (5.11;5.21;5.31;5.41), am radial inneren Rand der Einstecköffnung, insbesondere an den Fingerkuppen (5.1;5.4).

10. Axialspieleinstellung nach zumindest einem der vorhergehenden Ansprüche mit einem formschlüssigen Führungsangriff (3.1;5.7) zwischen der Kalotte (3) einerseits und der Kalottenbuchse (5) andererseits im Sinne eines gegenseitigen Verdrehschutzes in Drehrichtung der in der Kalotte (3) gelagerten Rotorwelle.

## Claims

1. Axial play setting between the rotor and stator of a motor with a rotor-side start-up part (6.1) and with a stator-side start-up part in the form of a spherical bearing (3) receiving the rotor shaft (2) and having a spherical bush (5) axially adjustable relative to a stator bearing receptacle (bearing plate 1.1) by rotation by means of a thread-like guide.

2. Axial play setting according to Claim 1, with a screwthread-like guide between at least part of the outer circumferential surface of the spherical bush (5), on the one hand, and at least part of the inner circumferential surface of the stator bearing receptacle (bearing plate 1.1), on the other hand.

3. Axial play setting according to Claim 1, with mutual axial guide bearing contact (5.9 or 1.12) of the spherical bush (5), on the one hand, and of the stator bearing receptacle (1.1), on the other hand, by means of a mutually opposed thread-like pitch.

4. Axial play setting according to at least one of the preceding claims, with a positive retention (5.5;1.11) of the fixing of the set position of the spherical bush (5) relative to its bearing receptacle (1.1).

5. Axial play setting according to Claim 4, with tangential indexing (5.5) on the circumference of the spherical bush (5) and with corresponding, especially elastic, flexible counterindexing (1.11) on the bearing receptacle (1.1).

6. Axial play setting according to at least one of the preceding claims, with a spherical bush (5) designed especially as a plastic part and having a radially elastically expandable spherical-bearing holder which at least partially surrounds the spherical bearing (3).

7. Axial play setting according to Claim 6 and/or 7, with an axial insertion orifice in the spherical bush (5) for pressing in the spherical bearing (3).

8. Axial play setting according to Claim 6 and/or 7, with a one-piece spherical bush (5) having axial, radially expandable, curved spherical-bush fingers (5.1-5.4) surrounding the spherical bearing (3) and having an insertion orifice for the spherical bearing (3) between the fingertips.

9. Axial play setting according to Claim 7 and/or 8, with snap hooks (5.11; 5.21; 5.31; 5.41) engaging behind the axially pressed-down spherical bearing (3), at the radially inner edge of the insertion orifice, especially at the fingertips (5.1; 5.4).

10. Axial play setting according to at least one of the preceding claims, with positive guide engagement (3.1; 5.7) between the spherical bearing (3), on the one hand, and the spherical bush (5), on the other hand, with the effect of protection against mutual twisting in the direction of rotation of the rotor shaft mounted in the spherical bearing (3).

## Revendications

1. Dispositif de réglage du jeu axial entre le rotor et le stator d'un moteur, comportant une pièce (6.1) de départ située du côté du rotor et une pièce de départ située du côté du stator, en forme d'un palier (3) en calotte qui reçoit l'arbre (2) rotorique, et comportant une douille (5) de calotte qui peut être déplacée axialement par rapport à un logement de palier statorique (flasque 1.1 de palier) en la faisant tourner au moyen d'un dispositif de guidage en forme de filetage.

2. Dispositif de réglage du jeu axial suivant la revendication 1, comportant un dispositif de guidage en forme de filetage hélicoïdal entre au moins une partie de la surface du pourtour extérieur de la douille (5) de calotte, d'une part, et au moins une partie de la surface du pourtour intérieur du palier statorique (flasque 1.1 de palier), d'autre part.

3. Dispositif de réglage du jeu axial suivant la revendication 1, comportant une pièce de guidage axial mutuel (5.9 et 1.12) de la douille (5) de calotte, d'une part, et du logement de palier statorique, d'autre part, qui comportent un filetage et un taraudage conjugués.

4. Dispositif de réglage du jeu axial suivant au moins une des revendications précédentes, comportant un dispositif (5.5; 1.11) de blocage d'immobilisation ayant une complémentarité de forme de la position de réglage de la douille (5) de calotte par rapport à son logement de palier (1.1).

5. Dispositif de réglage du jeu axial suivant la revendication 1, comportant un dispositif (5.5) tangentiel d'encliquetage sur le pourtour de la douille (5) de calotte et, sur le palier (1.1), un dispositif (1.11) d'encliquetage antagoniste correspondant, notamment élastique, pouvant céder.

6. Dispositif de réglage du jeu axial suivant au moins une des revendications précédentes, comportant une douille (5) de calotte réalisée notamment sous forme de pièce de matière plastique, comportant une fixation de calotte qui peut s'élargir élastiquement dans la direction radiale et qui entoure la calotte (3) au moins partiellement.

7. Dispositif de réglage du jeu axial suivant la revendication 6 et/ou 7, comportant une ouverture d'enfichage ménagée dans la douille (5) de calotte pour y enfoncer la calotte (3).

8. Dispositif de réglage du jeu axial suivant la revendication 6 et/ou 7, comportant une douille (5) de calotte d'un seul tenant, qui comporte des doigts (5.1 à 5.4) de douille de calotte axiaux recourbés, qui peuvent s'écarter radialement, qui entourent la calotte (3) et qui comporte une ouverture d'enfichage de la calotte (3) entre les sommets des doigts.

9. Dispositif de réglage du jeu axial suivant la revendication 7 et/ou 8, comportant, sur le bord radialement intérieur de l'ouverture d'enfichage, notamment aux sommets des doigts (5.1; 5.4), des crochets (5.11; 5.21; 5.31; 5.41) d'encliquetage accrochant la calotte (3) poussée axialement.

10. Dispositif de réglage du jeu axial suivant au moins une des revendications précédentes, comportant une entaille (3.1; 5.7) de guidage entre la calotte (3), d'une part, et la douille (5) de calotte, d'autre part, en vue d'empêcher mutuellement toute torsion dans le sens de rotation de l'arbre rotorique monté dans la calotte (3).
